# EUROPEAN PATENT SPECIFICATION

(11) **EP 4 435 505 B1**
(45) Date of publication and mention of the grant of the patent: **09.12.2026**
(21) Application number: 21819315.9
(22) Date of filing: 25.11.2021
(51) Int. Cl.: G02F 1/1333, G02F 1/1335, G02F 1/1362, G02F 1/1343

(54) **LIQUID CRYSTAL DISPLAY PANEL AND VEHICLE-MOUNTED LIQUID CRYSTAL DISPLAY APPARATUS**
FLÜSSIGKRISTALLANZEIGETAFEL UND FAHRZEUGMONTIERTE FLÜSSIGKRISTALLANZEIGEVORRICHTUNG
ÉCRAN D'AFFICHAGE À CRISTAUX LIQUIDES ET APPAREIL D'AFFICHAGE À CRISTAUX LIQUIDES MONTÉ SUR UN VÉHICULE

(30) Priority: 15.11.2021 CN 202111350140
(43) Date of publication of application: 25.09.2024
(73) Proprietor: Wuhan China Star Optoelectronics Technology Co., Ltd., Wuhan, Hubei 430079 (CN)
(72) Inventor: XU, Li, Wuhan, Hubei 430079 (CN); YU, Yang, Wuhan, Hubei 430079 (CN); LI, Song, Wuhan, Hubei 430079 (CN)
(74) Representative: Patentanwälte Olbricht Buchhold Keulertz
(86) International application number: PCT/CN2021/133121
(87) International publication number: WO 2023/082343

(56) References cited:
- CN-A- 109 451 107
- CN-A- 112 542 496
- CN-A- 113 109 965
- CN-A- 113 178 467
- CN-A- 113 495 378
- CN-A- 113 495 378
- CN-A- 113 594 217
- CN-B- 109 300 942
- US-A1- 2018 224 697

## Description

### FIELD OF INVENTION

The present application relates to the field of display technologies, and more particularly to a liquid crystal display panel and a vehicle-mounted liquid crystal display device.

### BACKGROUND OF INVENTION

With the development of display technologies and requirements of safe driving, existing vehicles will be equipped with DMS (driver monitor system). The driver's status can be monitored by setting active infrared sensors and mobile phone infrared light information on a vehicle. Specifically, in order to hide an infrared camera and lower holes, the infrared camera is set under a liquid crystal display screen. By digging holes in the liquid crystal display screen, a normal operation of the infrared camera is realized. A current liquid crystal display screen with infrared camera will remove film layers in a color filter substrate and an array substrate by digging a blind hole to improve a transmittance of infrared light. However, in a setting area of the infrared camera, multiple layers of the liquid crystal display are removed, resulting in a difference between a reflectivity of light in the setting area of the infrared camera and a reflectivity of light in a display area. There will be a difference in a brightness of the liquid crystal display screen, which will result in the phenomenon of not being able to reach full black.

Therefore, the current liquid crystal display screen has the technical problem that a total black display cannot be realized due to the difference in the reflectivity of the light in the setting area of the infrared camera compared to the display area.

CN 113495378A provides a display panel and a display device. The display panel includes a display area and an electronic component setting area. The electronic component setting area is used for installing electronic components, and allows infrared light to pass through. Specifically, the electronic component setting area is provided with a visible light blocking layer, which is used to block visible light. CN 113495378A configures the electronic component setting area in the display panel and installs the electronic components in the electronic component setting area. There is no need to set the electronic components separately. Moreover, by setting the visible light blocking layer in the electronic component setting area to block visible light, a fully black display of the electronic component setting area can be achieved. This avoids a situation where the display panel cannot display black completely, thereby affecting the display quality.

CN 109300942 B relates to the field of terminals, particularly to a display panel and a display device incorporating the same, aimed at alleviating the problem in the existing technology where the photosensitive module becomes visible under strong light, thereby affecting the overall appearance of the electronic device. The display panel includes: a display layer; a photosensitive module located on an inner side of the display layer; and an optical blocking layer provided between the display layer and the photosensitive module. The optical blocking layer is used to reduce the intensity of light emitted from the display layer towards the photosensitive module and/or the intensity of light reflected from the photosensitive module back to the display layer. The optical blocking layer can reduce the intensity of light emitted from the display layer towards the photosensitive module and/or the intensity of light reflected from the photosensitive module back to the display layer, thereby ensuring that the reflected light in each area of the display panel is basically consistent, reducing the visibility of the photosensitive module beneath the display layer, thereby alleviating the problem of the photosensitive module being visible and enhancing the overall appearance effect of the electronic device.

CN 109451107A provides an electronic device. The electronic device includes a display screen with backlight and a structured light component. The display screen includes a backlight source and a light guide plate. The backlight source includes a visible light source and an infrared light source. The light guide plate is used to guide the visible light emitted by the visible light source and the infrared light emitted by the infrared light source to the display screen. The structured light component includes a structured light projector and a structured light camera. The structured light projector is used to emit laser patterns towards the outside of the electronic device. The structured light camera is used to receive the infrared light and/or laser patterns reflected back by a target object. In some examples, by integrating the infrared light source on the backlight of the display screen, the use of infrared floodlights is avoided, thereby reducing the space occupied by the infrared floodlight in the structured light component on the display screen surface, which is beneficial to improving a screen ratio of the electronic device.

### TECHNICAL PROBLEM

The embodiments of the present application provide a liquid crystal display panel and a vehicle-mounted liquid crystal display device used to alleviate the technical problem that the current liquid crystal display screen cannot achieve a black display caused by the difference in the reflectivity of the light in the setting area of the infrared camera compared with the display area.

### SUMMARY OF INVENTION

The present invention is defined by the independent claims as appended. Developments are set forth in the dependent claims.

In order to solve the above problems, the technical solutions provided by this application are as follows:
An embodiment of the present application provides a liquid crystal display panel. The liquid crystal display panel comprises: a display area and a functional area configured to transmit infrared light, wherein the liquid crystal display panel comprises:
An array substrate comprising a plurality of insulating layers;
A color filter substrate arranged opposite to the array substrate and comprising a plurality of insulating layers;
Wherein in the array substrate and/or the color filter substrate, a number of reflective interfaces formed by adjacent insulating layers of different refractive indices located in the functional area is greater than a number of adjacent reflective interfaces with different refractive indices located in the display area, and an absolute value of a difference in refractive indices of adj acent insulating layers on both sides of the reflective interface is greater than or equal to a first preset threshold.

In some embodiments, in the color filter substrate, the plurality of insulating layers comprise a first substrate and a protective layer, in at least one of a side of the first substrate close to the protective layer and a side of the first substrate away from the protective layer, a number of reflective interfaces formed by adjacent insulating layers of different refractive indices located in the functional area is greater than a number of reflective interfaces formed by adjacent insulating layers of different refractive indices located in the display area.

In some embodiments, the color filter substrate further comprises:
A black matrix arranged between the first substrate and the protective layer, the black matrix is provided with a corresponding first opening in the functional area, and the first opening covers at least the functional area;
In the color filter substrate, the plurality of insulating layers further comprises an infrared light-transmitting layer disposed in the functional area and located between the first substrate and the protective layer, an absolute value of a difference in refractive indices between the infrared light-transmitting layer and an adjacent insulating layer thereof is greater than or equal to the first preset threshold.
In some embodiments, the liquid crystal display panel comprises a plurality of display pixels arranged in the display area, and the black matrix is provided with a second opening corresponding to the display pixel;
The plurality of insulating layers further comprise a color resist layer disposed at the first opening and the second opening, and an absolute value of a difference in refractive indices between the color resist layer and an adjacent insulating layer thereof is greater than or equal to the first preset threshold;
The infrared light-transmitting layer is arranged between the color resist layer and the first substrate, or the infrared light-transmitting layer is arranged between the color resist layer and the protective layer.

In some embodiments, in the display area, the color resist layer comprises a plurality of color resist blocks corresponding to colors of display pixels;
In the functional area, the color resist layer comprises at least two stacked layers of color resist sub-layers with different colors passing through, an absolute value of a difference in refractive indices of the color resist sub-layers with different colors passing through is less than or equal to a second preset threshold, and the second preset threshold is less than the first preset threshold.
In some embodiments, the infrared light-transmitting layer comprises a first inorganic layer and a second inorganic layer that are stacked;
An absolute value of a difference in refractive indices between the first inorganic layer and an adjacent insulating layer thereof is greater than or equal to the first preset threshold;
An absolute value of a difference in refractive indices between the second inorganic layer and an adjacent insulating layer thereof is greater than or equal to the first preset threshold.

In some embodiments, in the color filter substrate, the plurality of insulating layers further comprise a high resistance layer disposed on a side of the first substrate away from the protective layer;
The high resistance layer comprises a first high resistance area located in the functional area and a second high resistance area located in the display area, refractive indices of the high resistance layer in the first high resistance area and the second high resistance area are different;
An absolute value of a difference between the refractive index of the high resistance layer in the first high resistance area and the refractive index of the first substrate is greater than or equal to the first preset threshold;
An absolute value of a difference between the refractive index of the high resistance layer in the second high resistance area and the refractive index of the first substrate is greater than or equal to a second preset threshold, and the second preset threshold is less than the first preset threshold.

In some embodiments, the liquid crystal display panel further comprises a first polarizer arranged on a side of the array substrate away from the color filter substrate and a second polarizer arranged on a side of the color filter substrate away from the array substrate;
The high resistance layer is disposed between the first substrate and the second polarizer.

In some embodiments, in the array substrate, the plurality of insulating layers comprise a second substrate and a passivation layer, in at least one of a side of the second substrate close to the passivation layer and a side of the second substrate away from the passivation layer, a number of reflective interfaces formed by adjacent insulating layers with different refractive indices located in the functional area is greater than a number of reflective interfaces formed by adjacent insulating layers with different refractive indices located in the display area.

In some embodiments, the array substrate further comprises a metal conductive layer, the metal conductive layer is provided with a corresponding third opening in the functional area, and the third opening at least covers the functional area.

In some embodiments, in the array substrate, the plurality of insulating layers further comprise a buffer layer, a gate insulating layer, and an interlayer insulating layer that are sequentially stacked between the second substrate and the passivation layer, the buffer layer extends from the display area to the functional area, the gate insulating layer extends from the display area to the functional area, and the interlayer insulating layer extends from the display area to the functional area;
The metal conductive layer comprises a first electrode layer and a second electrode layer disposed on both sides of the passivation layer, and the passivation layer is in direct contact with a planarization layer in the functional area.

Further, an embodiment of the present application provides a vehicle-mounted liquid crystal display device. The vehicle-mounted liquid crystal display device comprises:
A liquid crystal display panel comprising a display area and a functional area configured to transmit infrared light, wherein the liquid crystal display panel comprises an array substrate and a color filter substrate, the array substrate comprises a plurality of insulating layers, the color filter substrate is arranged opposite to the array substrate and comprises a plurality of insulating layers, wherein in the array substrate and/or the color filter substrate, a number of reflective interfaces formed by adjacent insulating layers of different refractive indices located in the functional area is greater than a number of adjacent reflective interfaces with different refractive indices located in the display area, and an absolute value of a difference in refractive indices of adj acent insulating layers on both sides of the reflective interface is greater than or equal to a first preset threshold;
An infrared camera arranged on a side of the array substrate away from the color filter substrate, and the infrared camera arranged on the functional area.

In some embodiments, in the color filter substrate, the plurality of insulating layers comprise a first substrate and a protective layer, in at least one of a side of the first substrate close to the protective layer and a side of the first substrate away from the protective layer, a number of reflective interfaces formed by adjacent insulating layers of different refractive indices located in the functional area is greater than a number of reflective interfaces formed by adjacent insulating layers of different refractive indices located in the display area.

In some embodiments, the color filter substrate further comprises:
A black matrix arranged between the first substrate and the protective layer, the black matrix is provided with a corresponding first opening in the functional area, and the first opening covers at least the functional area;
In the color filter substrate, the plurality of insulating layers further comprises an infrared light-transmitting layer disposed in the functional area and located between the first substrate and the protective layer, an absolute value of a difference in refractive indices between the infrared light-transmitting layer and an adjacent insulating layer thereof is greater than or equal to the first preset threshold.

In some embodiments, the liquid crystal display panel comprises a plurality of display pixels arranged in the display area, and the black matrix is provided with a second opening corresponding to the display pixel;
The plurality of insulating layers further comprise a color resist layer disposed at the first opening and the second opening, and an absolute value of a difference in refractive indices between the color resist layer and an adjacent insulating layer thereof is greater than or equal to the first preset threshold;
The infrared light-transmitting layer is arranged between the color resist layer and the first substrate, or the infrared light-transmitting layer is arranged between the color resist layer and the protective layer.

In some embodiments, in the display area, the color resist layer comprises a plurality of color resist blocks corresponding to colors of display pixels;
In the functional area, the color resist layer comprises at least two stacked layers of color resist sub-layers with different colors passing through, an absolute value of a difference in refractive indices of the color resist sub-layers with different colors passing through is less than or equal to a second preset threshold, and the second preset threshold is less than the first preset threshold.

In some embodiments, the infrared light-transmitting layer comprises a first inorganic layer and a second inorganic layer that are stacked;
An absolute value of a difference in refractive indices between the first inorganic layer and an adjacent insulating layer thereof is greater than or equal to the first preset threshold;
An absolute value of a difference in refractive indices between the second inorganic layer and an adjacent insulating layer thereof is greater than or equal to the first preset threshold.

In some embodiments, in the color filter substrate, the plurality of insulating layers further comprise a high resistance layer disposed on a side of the first substrate away from the protective layer;
The high resistance layer comprises a first high resistance area located in the functional area and a second high resistance area located in the display area, refractive indices of the high resistance layer in the first high resistance area and the second high resistance area are different;
An absolute value of a difference between the refractive index of the high resistance layer in the first high resistance area and the refractive index of the first substrate is greater than or equal to the first preset threshold;
An absolute value of a difference between the refractive index of the high resistance layer in the second high resistance area and the refractive index of the first substrate is greater than or equal to a second preset threshold, and the second preset threshold is less than the first preset threshold.

In some embodiments, the liquid crystal display panel further comprises a first polarizer arranged on a side of the array substrate away from the color filter substrate and a second polarizer arranged on a side of the color filter substrate away from the array substrate;
The high resistance layer is disposed between the first substrate and the second polarizer.

In some embodiments, in the array substrate, the plurality of insulating layers comprise a second substrate and a passivation layer, in at least one of a side of the second substrate close to the passivation layer and a side of the second substrate away from the passivation layer, a number of reflective interfaces formed by adjacent insulating layers with different refractive indices located in the functional area is greater than a number of reflective interfaces formed by adjacent insulating layers with different refractive indices located in the display area.

### BENEFICIAL EFFECT

The present application provides a liquid crystal display panel and a vehicle-mounted liquid crystal display device. The liquid crystal display panel comprises a display area and a functional area configured to transmit infrared light, wherein the liquid crystal display panel comprises: an array substrate comprising a plurality of insulating layers; a color filter substrate arranged opposite to the array substrate and comprising a plurality of insulating layers; wherein in the array substrate and/or the color filter substrate, a number of reflective interfaces formed by adjacent insulating layers of different refractive indices located in the functional area is greater than a number of adjacent reflective interfaces with different refractive indices located in the display area, and an absolute value of a difference in refractive indices of adjacent insulating layers on both sides of the reflective interface is greater than or equal to a first preset threshold. In this application, in the array substrate and/or color filter substrate, the number of reflective interfaces formed by adjacent insulating layers with different refractive indices in the functional area is greater than the number of adjacent reflective interfaces with different refractive indices in the display area. Because the reflectance of the liquid crystal display panel is superimposed by the reflectance of each film layer, the present application does not affect the infrared optical transmittance by making the number of reflective interfaces in the functional area larger than the number of reflective interfaces in the display area. In the display area, the reflectivity of the light in the functional area is improved. This reduces or even eliminates the brightness difference between the functional area and the display area when the display is completely black.

### DESCRIPTION OF DRAWINGS

The technical solutions and other beneficial effects of the present application will be made obvious by describing the specific implementation manners of the present application in detail below in conjunction with the accompanying drawings.
FIG. 1 is a schematic diagram of a liquid crystal display panel provided by an embodiment of the present application.
FIG. 2 is a schematic diagram of reflection of light through an insulating layer provided by an embodiment of the present application.
FIG. 3 is a first schematic diagram of a color filter substrate provided by an embodiment of the present application.
FIG. 4 is a second schematic diagram of a color filter substrate provided by an embodiment of the present application.
FIG. 5 is a schematic diagram of a vehicle-mounted liquid crystal display device provided by an embodiment of the present application.

### DETAILED DESCRIPTION OF PREFERRED EMBODIMENTS

The technical solutions in the embodiments of the present application will be clearly and completely described below in conjunction with the drawings in the embodiments of the present application. Obviously, the described embodiments are only a part of the embodiments of the present application, rather than all the embodiments. Based on the embodiments in this application, all other embodiments obtained by those skilled in the art without creative work shall fall within the protection scope of this application.

In view of the technical problem of inability to achieve full black display due to a different reflectivity of light in a setting area of an infrared camera compared to a display area in a current liquid crystal display screen, an embodiment of the present application provides a liquid crystal display panel and a vehicle-mounted liquid crystal display device to solve the above technical problems.

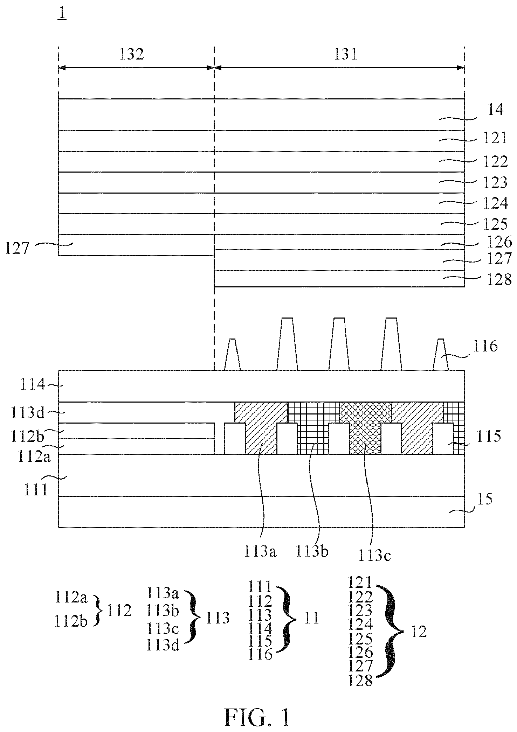

As shown in FIG. 1, an embodiment of the present application provides a liquid crystal display panel. The liquid crystal display panel 1 includes a display area 131 and a functional area 132 that transmits infrared light. The liquid crystal display panel 1 includes the following.

An array substrate 12 includes a plurality of insulating layers (for example, a second substrate 121).

A color filter substrate 11 is disposed opposite to the array substrate 12 and includes a plurality of insulating layers (for example, a first substrate 111).

In the array substrate 12 and/or the color filter substrate 11, a number of reflective interfaces formed by adjacent insulating layers of different refractive indices located in the functional area 132 is greater than a number of adjacent reflective interfaces with different refractive indices located in the display area 131, and an absolute value of a difference in refractive indices of adj acent insulating layers on both sides of the reflective interface is greater than or equal to a first preset threshold.

An embodiment of the application provides a liquid crystal display panel. In the array substrate and/or color filter substrate, the number of reflective interfaces formed by adjacent insulating layers with different refractive indices in the functional area is greater than the number of adjacent reflective interfaces with different refractive indices in the display area. Because the reflectance of the liquid crystal display panel is superimposed by the reflectance of each film layer, the present application does not affect the infrared optical transmittance by making the number of reflective interfaces in the functional area larger than the number of reflective interfaces in the display area. In the display area, the reflectivity of the light in the functional area is improved. This reduces or even eliminates the brightness difference between the functional area and the display area when the display is completely black.

It should be noted that in the embodiments of the present application, the insulating layer refers to a common electrode layer and a pixel electrode layer formed of ITO (indium tin oxide) or a common electrode layer and a pixel electrode layer formed of other conductive materials, and an inorganic film layer and an organic film layer of a semiconductor active layer. Specifically, the black matrix is due to light absorption. Therefore, the insulating layer defined in the embodiment of the present application does not include a black matrix.

It should be noted that the reflective interface refers to the interface between adjacent insulating layers with different refractive indices that reflects visible light, and the absolute value of the difference in refractive index of the adjacent insulating layers on both sides of the reflective interface is greater than or equal to the first preset threshold. For example, in the display area, as shown in FIG. 1, an absolute value of a difference between the refractive index of the first substrate 111 and a color resist layer 113 is greater than or equal to the first preset threshold. The interface between the first substrate 111 and the color resist layer 113 is a reflective interface. A black matrix 115 absorbs light and does not reflect light, therefore the interface between the black matrix 115 and the first substrate 111 is not a reflective interface. Further, the absolute value of the difference between the refractive index of the color resist layer 113 and a protective layer 114 is greater than or equal to the first preset threshold. The interface between the color resist layer 113 and the protective layer 114 is a reflective interface. A support column 116 is disposed in an area corresponding to the black matrix 115, no light or less light will diverge between the support column 116 and the protective layer 114, with less or no reflection. The support columns 116 are arranged at intervals without a complete interface, which further reduces the reflected light or even no reflected light. Therefore, there is no reflective interface between the support columns and the protective layer. From the above analysis, it can be known that in the current liquid crystal display panel, the number of reflective interfaces located in the display area on the color filter substrate is two.

It should be noted that the first preset threshold refers to when the refractive index of two adjacent film layers is greater than a threshold, the interface between the two adjacent film layers will produce reflection or larger emission. Further, the interface between two adjacent insulating layers can be used as a reflective interface. For example, the color resist layer will include multiple color resists that transmit light of different colors. The difference in refractive index between the multiple color resistors that transmits light of different colors is small or even the same, for example, less than or equal to 0.01. The interface between two layers of color resist basically does not reflect light. Therefore, two layers of color resist will be used as a whole instead of the interface between the two layers of color resist as a reflective interface. Therefore, when the absolute value of the refractive index difference between adjacent insulating layers is greater than or equal to the first preset threshold, for example, greater than or equal to 0.1 (in actual applications, you can also choose 0.1, 0.2, 0.3, 0, 4, 0.5, etc.), the interface between adjacent insulating layers is a reflective interface. The absolute value of the refractive index difference between adjacent insulating layers is less than or equal to the second preset threshold, and the adjacent insulating layers can be regarded as a whole. When the absolute value of the refractive index difference between adjacent insulating layers is between a second preset threshold and the first preset threshold, the interface between the adjacent insulating layers is not regarded as a reflective interface.

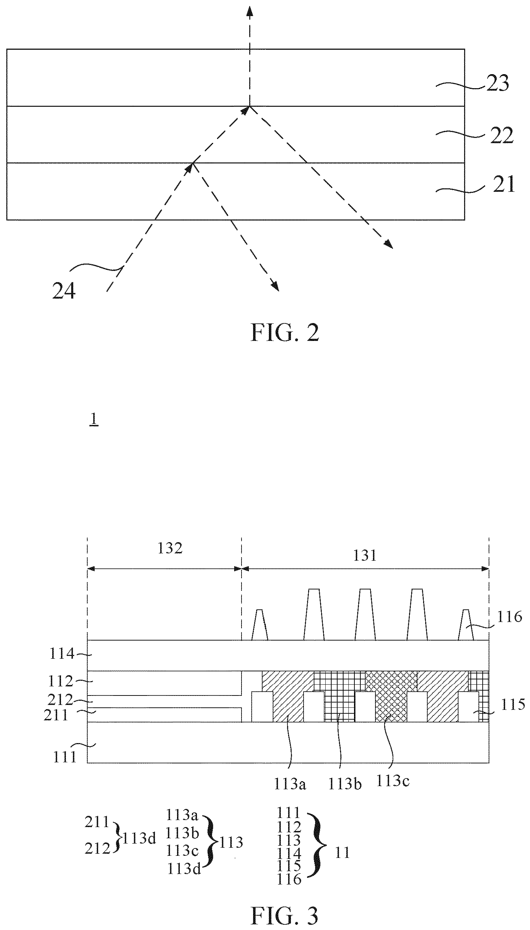

It should be noted that, as shown in FIG. 2, the liquid crystal display device includes a plurality of insulating layers: a first film layer 21, a second film layer 22, and a third film layer 23. When external light 24 is irradiated to the liquid crystal display device, the refractive index of the first film layer 21 is n1, the refractive index of the second film layer 22 is n2, and the refractive index of the third film layer 23 is n3. The reflectivity of the external light 24 at the interface between the first film layer 21 and the second film layer 22 R1 = (n2-n1)²/(n2 + n1)². The reflectivity of the external light 24 at the interface between the second film layer 22 and the third film layer 23 R2 = (n3-n2)²/(n3 + n2)². The reflectivity of the external light of the liquid crystal display device is R=R1+R2.

It can be known from the above analysis that, in the embodiment of the present application, the number of reflective interfaces formed by the insulating layers in the functional area is greater than the number of reflective interfaces formed by the insulating layers in the display area in the array substrate and/or the color filter substrate. This improves the reflectivity of the functional area of the liquid crystal display panel to the ambient light, thereby narrowing the difference in the light reflectivity of the functional area and the display area to the ambient light, and improving the brightness uniformity of the liquid crystal display panel when the liquid crystal display panel is completely black.

It should be noted that, in the embodiment of the present application, compared with a current design scheme of an under-screen camera, because a camera area under the current screen needs to transmit visible light to realize a camera function, holes in a camera setting area under the screen are drilled to remove organic and inorganic layers, and this causes the reflectivity of the camera setting area under the screen to the light of the external environment to be different from the reflectivity of the light of the display area. This application takes into account that the infrared camera needs to collect infrared light, and the film layer such as color resist has a higher transmittance of infrared light. Therefore, it is possible to add color resist and other layers in the functional area without affecting the transmission of infrared light. This narrows the gap between the reflected light of the functional area and the display area, and improves the brightness uniformity of the liquid crystal display panel when the liquid crystal display panel is displayed in black.

In an embodiment, in the color filter substrate, a number of reflective interfaces formed by adjacent insulating layers of different refractive indices located in the functional area is greater than a number of reflective interfaces formed by adjacent insulating layers of different refractive indices located in the display area. In the liquid crystal display panel, in order to improve the light transmittance of the camera setting area under the screen., the current liquid crystal display panel removes the color resist and black matrix in the color fitter substrate. The color fitter substrate in the camera setting area under the screen is flattened by other film layers. Therefore, in the embodiment of the present application, the color filter substrate is designed, an insulating layer is arranged in the space formed by the removed color resist and the black matrix, and the reflective interfaces formed by adjacent insulating layers with different refractive indices in the functional area are increased. This makes the number of reflective interfaces formed by adjacent insulating layers with different refractive indices located in the functional area greater than the number of reflective interfaces formed by adjacent insulating layers with different refractive indices located in the display area. Thereby, the light reflectance of the functional area is improved, the gap between the light reflectance of the functional area and the display area is reduced, and the uniformity of the liquid crystal display panel when the liquid crystal display panel is displayed in black is improved.

In one embodiment, as shown in FIG. 1, in the color filter substrate 11, the plurality of insulating layers comprise a first substrate 111 and a protective layer 114, in at least one of a side of the first substrate 111 close to the protective layer 114 and a side of the first substrate 111 away from the protective layer 114, a number of reflective interfaces formed by adjacent insulating layers of different refractive indices located in the functional area 132 is greater than a number of reflective interfaces formed by adjacent insulating layers of different refractive indices located in the display area 131. By increasing the number of reflective interfaces on at least one of the two sides of the first substrate, the reflectivity of the functional area is increased, and the difference between the reflectivity of the functional area and the display area is reduced. Thereby, the brightness uniformity of the liquid crystal display panel when the liquid crystal display panel is displayed in black is improved.

Specifically, taking FIG. 1 as an example, when the refractive indices of a first inorganic layer 112a and a second inorganic layer 112b are different from the adjacent film layers, the reflective interfaces of the functional area include four, and the reflective interfaces of the display area include two. The number of reflective interfaces of the insulating layers with different refractive indices in the functional area is greater than the number of reflective interfaces of the insulating layers of different refractive indices in the display area. This increases the reflectivity of the functional area and narrows the difference between the reflectivity of the functional area and the display area, thereby improving the brightness uniformity of the liquid crystal display panel when the liquid crystal display panel is displayed in black.

For the current display device, the color resist and black matrix will be removed in the camera setting area under the screen, which leads to the problem that there are fewer reflective interfaces in the camera setting area under the screen. In one embodiment, as shown in FIG. 1, the color filter substrate 11 further comprises a black matrix 115 arranged between the first substrate 111 and the protective layer 114, the black matrix 115 is provided with a corresponding first opening in the functional area 132, and the first opening covers at least the functional area 132;
In the color filter substrate 11, the plurality of insulating layers further comprises an infrared light-transmitting layer 112 disposed in the functional area 132 and located between the first substrate 111 and the protective layer 114, an absolute value of a difference in refractive indices between the infrared light-transmitting layer 112 and an adjacent insulating layer thereof is greater than or equal to the first preset threshold. When the black matrix is removed in the functional area, in the functional area, an infrared light-transmitting layer is formed by the space between the first substrate and the protective layer. The absolute value of the difference in refractive index between the infrared-transmitting layer and the adjacent insulating layer is greater than or equal to the first preset threshold, then the number of reflective interfaces between the first substrate and the protective layer is increased. This improves the reflectivity of the functional area and narrows the difference between the reflectivity of the functional area and the display area. Thereby, the brightness uniformity of the liquid crystal display panel when the liquid crystal display panel is displayed in black is improved. Because the increased infrared light-transmitting layer is arranged between the first substrate and the protective layer, the thickness of the liquid crystal display panel will not be increased.

In one embodiment, as shown in FIG. 1, the liquid crystal display panel 1 comprises a plurality of display pixels arranged in the display area, and the black matrix 115 is provided with a second opening corresponding to the display pixel;
The plurality of insulating layers further comprise a color resist layer 113 disposed at the first opening and the second opening, and an absolute value of a difference in refractive indices between the color resist layer 113 and an adjacent insulating layer thereof is greater than or equal to the first preset threshold;
The infrared light-transmitting layer 112 is arranged between the color resist layer 113 and the first substrate 111, or as shown in FIG. 3, the infrared light-transmitting layer 112 is arranged between the color resist layer 113 and the protective layer 114. In the liquid crystal display panel, a color resist layer is set in the display area. The embodiment of the application considers that the transmittance of the color resist to infrared light is relatively high. Therefore, it is possible to form a color resist layer in the display area while forming a color resist layer in the functional area. This increases the number of reflective interfaces in the functional area, improves the reflectivity of the functional area, and narrows the gap between the reflectivity of the functional area and the display area. Therefore, the brightness uniformity of the liquid crystal display panel when the liquid crystal display panel is displayed in all black is improved, and the setting method does not need to increase the process of the liquid crystal display panel, and does not need to increase the thickness of the liquid crystal display panel.

Specifically, the infrared light-transmitting layer is disposed between the color resist layer and the first substrate. In the functional area, a reflective interface can be formed between the first substrate and the infrared-transmitting layer. A reflective interface is formed between the color resist layer and the infrared light-transmitting layer. A reflective interface is formed between the color resist layer and the protective layer. Thereby increasing the reflective interface of the functional area and narrowing the gap between the reflectivity of the functional area and the display area. Thereby, the brightness uniformity of the liquid crystal display panel when the liquid crystal display panel is displayed in black is improved.

Specifically, the infrared light-transmitting layer is arranged between the color resist layer and the protective layer. In the functional area, a reflective interface can be formed between the first substrate and the color resist layer. A reflective interface is formed between the color resist layer and the infrared light-transmitting layer. A reflective interface is formed between the infrared light-transmitting layer and the protective layer. Thereby increasing the reflective interface of the functional area and narrowing the gap between the reflectivity of the functional area and the display area. Thereby, the brightness uniformity of the liquid crystal display panel when the liquid crystal display panel is displayed in black is improved. In practical applications, the infrared light-transmitting layer can be a silicon oxide film with a refractive index of 1.5 and a silicon nitride film with a refractive index of 1.85, or it can be determined according to actual needs, and there is no limitation here.

When the color resist layer that transmits a single color is set in the functional area, it cannot block visible light, which will cause the problem of light leakage in the functional area. In one embodiment, as shown in FIG. 3, in the display area, the color resist layer 113 comprises a plurality of color resist blocks corresponding to colors of display pixels (such as red color block 113a, green color block 113b, blue color block 113c).

In the functional area 132, the color resist layer 113 comprises at least two stacked layers of color resist sub-layers 113d (For example, it includes a red color resist sub-layer 211 and a blue color resist sub-layer 212) with different colors passing through, an absolute value of a difference in refractive indices of the color resist sub-layers 113d with different colors passing through is less than or equal to a second preset threshold, and the second preset threshold is less than the first preset threshold. Because materials that pass through the color resist sub-layers with different colors are similar, and the refractive index is similar, in the reflection of light, the interface between the two has a low reflectivity to light. Therefore, the two can be regarded as a whole, and the refractive index can also be regarded as a whole, and the interface between the two is not regarded as a reflective interface. By arranging multiple color resist sub-layers in the functional area, the visible light can be blocked without increasing the process of the liquid crystal display panel, and light leakage in the visible light functional area can be avoided.

In order to further improve the reflectivity of the functional area, the brightness uniformity of the liquid crystal display panel when the liquid crystal display panel is displayed in black is improved. In one embodiment, as shown in FIG. 1, the infrared light-transmitting layer 112 comprises a first inorganic layer 112a and a second inorganic layer 112b that are stacked.

An absolute value of a difference in refractive indices between the first inorganic layer 112a and an adjacent insulating layer thereof is greater than or equal to the first preset threshold.

An absolute value of a difference in refractive indices between the second inorganic layer 112b and an adjacent insulating layer thereof is greater than or equal to the first preset threshold. The infrared light-transmitting layer is provided as a first inorganic layer and a second inorganic layer. The absolute value of the refractive index difference between the first inorganic layer and the second inorganic layer and the adjacent insulating layer is greater than or equal to the first preset threshold. This further increases the number of reflective interfaces, reduces the difference in reflectivity between the functional area and the display area, thereby improving the brightness uniformity of the liquid crystal display panel when the liquid crystal display panel is displayed in black.

Specifically, as shown in FIG. 1, the first inorganic layer 112a is disposed between the first substrate 111 and the second inorganic layer 112b. The refractive index of the first inorganic layer 112 a is greater than the refractive index of the first substrate 111. The refractive index of the first inorganic layer 112a is greater than the refractive index of the second inorganic layer 112b. The refractive index of the second inorganic layer is less than the refractive index of the color resist layer 113, and the absolute value of the refractive index difference between adjacent insulating layers is greater than or equal to the first preset threshold. By setting the refractive index of the insulating layer in the functional area to be staggered, the refractive indices of the two insulating layers in the two adjacent insulating film layers are greatly different. This will not make the refractive index of a single film layer too large, resulting in excessive reflection of light. This increases the number of reflective interfaces and narrows the difference in reflectivity between the functional area and the display area. Thereby, the brightness uniformity of the liquid crystal display panel when the liquid crystal display panel is displayed in black is improved.

The foregoing embodiments have been described in detail by taking the first inorganic layer and the second inorganic layer in the infrared light-transmitting layer disposed between the first substrate and the color resist layer as an example, but the embodiments of the present application are not limited to this, and the first inorganic layer and the second inorganic layer can also be arranged separately or adjacently arranged in other positions.

The foregoing embodiments describe in detail the manner in which the color resist layer and the infrared light-transmitting layer are added to increase the reflective interface, but the embodiments of the present application are not limited to this. For example, only the infrared light-transmitting layer is provided, so that the infrared light-transmitting layer includes multiple film layers. The absolute value of the refractive index difference between any one of the multiple film layers and the adjacent insulating layer is greater than or equal to the first preset threshold. Alternatively, a plurality of infrared light-transmitting layers are provided, so that the absolute value of the refractive index difference between each infrared light-transmitting layer and the adjacent insulating layer is greater than or equal to the first preset threshold.

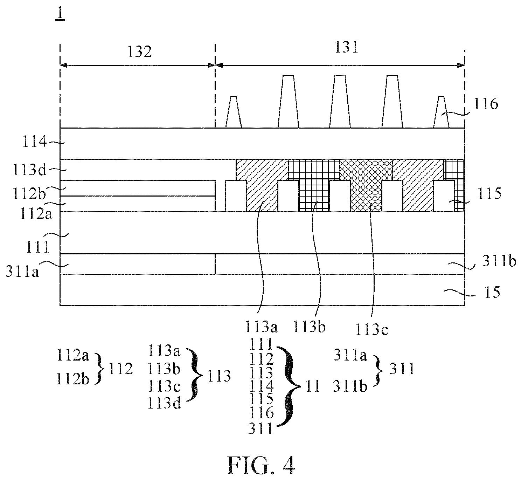

The foregoing embodiment has been described in detail by taking the addition of a reflective interface between the first substrate and the protective layer as an example, but the embodiment of the present application is not limited to this. In one embodiment, as shown in FIG. 4, in the color filter substrate 11, the plurality of insulating layers further comprise a high resistance layer 311 disposed on a side of the first substrate 111 away from the protective layer 114.

The high resistance layer 311 comprises a first high resistance area 311a located in the functional area 132 and a second high resistance area 311b located in the display area 131, refractive indices of the high resistance layer 311 in the first high resistance area 311a and the second high resistance area 311b are different.

An absolute value of a difference between the refractive index of the high resistance layer 311 in the first high resistance area 311a and the refractive index of the first substrate 111 is greater than or equal to the first preset threshold.

An absolute value of a difference between the refractive index of the high resistance layer 311 in the second high resistance area 311b and the refractive index of the first substrate 111 is greater than or equal to a second preset threshold, and the second preset threshold is less than the first preset threshold. A high resistance layer is provided on the side of the first substrate away from the protective layer. The absolute value of the refractive index difference between the first high resistance area of the high resistance layer and the first substrate is greater than or equal to the first preset threshold. The absolute value of the refractive index difference of the first substrate in the second high resistance area is less than or equal to the second preset threshold. This increases the number of reflective interfaces in the functional area. In addition, the display area is flattened, which narrows the difference in reflectivity between the functional area and the display area. Thereby, the brightness uniformity of the liquid crystal display panel when the liquid crystal display panel is displayed in black is improved.

In an embodiment, as shown in FIG. 1 and FIG. 4, the liquid crystal display panel 1 further comprises a first polarizer 14 arranged on a side of the array substrate 12 away from the color filter substrate 11 and a second polarizer 15 arranged on a side of the color filter substrate 11 away from the array substrate 12.

The high resistance layer 311 is disposed between the first substrate 111 and the second polarizer 15 By disposing the high resistance layer between the first substrate and the second polarizer, damage to the high resistance layer is avoided.

Specifically, the refractive index difference between the first high resistance region and the second high resistance region of the high resistance layer can be formed by doping.

The above-mentioned embodiments are described in detail by taking the different refractive indicis of the first high resistance area and the second high resistance area of the high resistance layer as an example. However, the embodiments of the present application are not limited to this, and high resistance layers with different refractive indicis may be formed in the functional area and the display area respectively.

The foregoing embodiment has been described in detail by taking the high-resistance layer provided between the first substrate and the second polarizer as an example. However, the embodiments of the present application are not limited to this, and the high resistance layer may also be disposed on the side of the second polarizer away from the first substrate.

In one embodiment, as shown in FIG. 1, the array substrate 12 further comprises a metal conductive layer (such as the first electrode layer 126 and the second electrode layer 128), the metal conductive layer is provided with a corresponding third opening in the functional area 132, and the third opening at least covers the functional area 132. By removing the metal layer in the functional area, the infrared light transmittance of the functional area is improved.

For the current liquid crystal display device, the film layer of the array substrate located in the functional area is dug to increase the light transmittance, resulting in uneven brightness caused by the difference in light reflectivity between the functional area and the display area. In one embodiment, as shown in FIG. 1, in the array substrate 12, the plurality of insulating layers further include a buffer layer 122, a gate insulating layer 123, an interlayer insulating layer 124, and a planarization layer 125 that are sequentially stacked between the second substrate 121 and the passivation layer 127. The buffer layer 122 extends from the display area 131 to the functional area 132, the gate insulating layer 123 extends from the display area 131 to the functional area 132, and the interlayer insulating layer 124 extends from the display area. 131 extends to the functional area 132.

The metal conductive layer comprises a first electrode layer 126 and a second electrode layer 128 disposed on both sides of the passivation layer 127, and the passivation layer 127 is in direct contact with the planarization layer 125 in the functional area 132. For the current liquid crystal display panel, the film layer of the functional area will be removed, resulting in low reflectivity of the functional area. This application increases the number of reflective interfaces in the functional area, improves the reflectivity of the functional area, and narrows the gap between the reflectivity of the functional area and the display area by retaining or increasing the film layer of the functional area, thereby, the brightness uniformity of the liquid crystal display panel when the liquid crystal display panel is displayed in black is improved.

It should be noted that at least most areas of the passivation layer and the planarization layer in the display area are not in direct contact. Therefore, the number of reflective interfaces formed by adjacent insulating layers in the functional area is greater than the number of reflective interfaces formed by adjacent insulating layers in the display area.

In one embodiment, in the array substrate, between the passivation layer and the second substrate and/or the side of the passivation layer away from the second substrate, and/or the side of the second substrate away from the passivation layer, and the plurality of insulating layers further include a transparent layer. The absolute value of the refractive index difference between the transparent layer and the adjacent insulating layer is greater than or equal to the first preset threshold. That is, by adding the transparent layer in the array substrate, the number of reflective interfaces in the functional area is further increased. Thereby, the reflectance of the functional area is increased, and the difference between the reflectance of the functional area and the display area is reduced, thereby improving the brightness uniformity of the liquid crystal display panel when the liquid crystal display panel is displayed in black.

Specifically, the following table illustrates the theoretical data of the reflectance of the functional area in the embodiment of the present application.

**Table 1: Reflectivity of each reflective interface of the array substrate**

| Insulating layer of array substrate | Refractive index | Theoretical reflectivity of adjacent insulating layers |
|---|---|---|
| Passivation layer | 1.85 | 0.779% |
| Planarization layer | 1.55 | 0.070% |
| Silicon oxide layer in the interlayer insulating layer | 1.47 | 1.434% |
| Silicon nitride layer in interlayer insulating layer | 1.87 | 1.600% |
| Gate insulating layer | 1.45 | 0.019% |
| Silicon oxide layer in buffer layer | 1.49 | 1.279% |
| Silicon nitride layer in buffer layer | 1.87 | 1.134% |
| Second substrate | 1.21 | |

It should be noted that the second substrate itself does not form a reflective interface. Therefore, the reflectivity of the reflective interface formed by the second substrate and the silicon nitride layer in the buffer layer is described in the column of the silicon nitride layer in the buffer layer. The reflective interface represented by other values of reflectivity is as described above. As can be seen from Table 1 above, in the functional area, compared with the current reflectivity of the functional area on the array substrate side after the film is removed, the reflectivity of the functional area is increased to 6.28% in this application, which improves the reflectivity of the functional area. It should be noted that the difference in refractive index between the gate insulating layer and the silicon oxide layer in the buffer layer is not too large (0.04), and is smaller than the first preset threshold (greater than or equal to 0.1). The contact between them contributes little to the reflectivity of the external ambient light, and the contact surface between them may not be regarded as the reflective interface mentioned above.

**Table 2: Reflectivity of each reflective interface of the color fifter substrate**

| Insulating layer of color filter substrate | Refractive index | Theoretical reflectivity of adjacent insulating layers |
|---|---|---|
| Protective layer | 1.5 | 0.39% |
| Color resist layer | 1.7 | 0.43% |
| Silicon oxide layer in infrared light-transmitting layer | 1.5 | 1.09% |
| Silicon nitride layer in infrared light-transmitting layer | 1.85 | 1.02% |
| First substrate | 1.51 | |

It should be noted that the first substrate itself does not form a reflective interface. Therefore, the reflectance of the reflective interface formed by the first substrate and the silicon nitride layer in the infrared light-transmitting layer is described in the column of the silicon nitride layer in the infrared light-transmitting layer. The reflective interface represented by other values of reflectivity is as described above. From Table 2 above, it can be seen that in the functional area, the reflectance of the functional area on the side of the color filter substrate is 0.78% compared to the current color filter substrate side after the film layer is removed. In this application, the reflectivity is increased to 2.90%, which improves the reflectivity of the functional area to external ambient light.

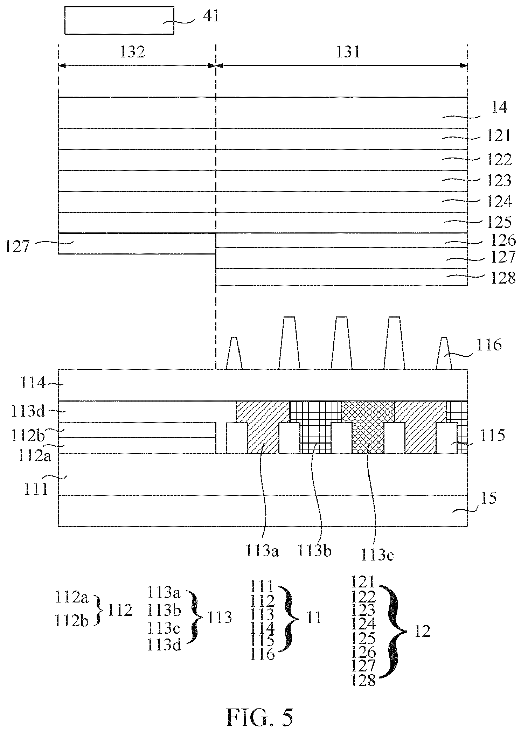

Further, as shown in FIG. 5, an embodiment of the present application provides a vehicle-mounted liquid crystal display device. The vehicle-mounted liquid crystal display device comprises the following.

A liquid crystal display panel comprises a display area 131 and a functional area 132 configured to transmit infrared light, wherein the liquid crystal display panel comprises an array substrate 12 and a color filter substrate 11, the array substrate 12 comprises a plurality of insulating layers (such as second substrate 121), the color filter substrate 11 is arranged opposite to the array substrate 12 and comprises a plurality of insulating layers (such as first substrate 111), wherein in the array substrate 12 and/or the color filter substrate 11, a number of reflective interfaces formed by adjacent insulating layers of different refractive indices located in the functional area 132 is greater than a number of adjacent reflective interfaces with different refractive indices located in the display area 131, and an absolute value of a difference in refractive indices of adj acent insulating layers on both sides of the reflective interface is greater than or equal to a first preset threshold.

An infrared camera 41 is arranged on a side of the array substrate 12 away from the color filter substrate 11, and the infrared camera 41 is arranged on the functional area 132.

The backlight module (not shown in the figure) is arranged on the side of the array substrate 12 away from the color filter substrate 11, the corresponding functional area 132 of the backlight module can be provided with openings, and the infrared camera 41 can be inserted into the opening of the backlight module.

It should be noted that the liquid crystal display panel used in the vehicle-mounted liquid crystal display device is the liquid crystal display panel described above, and its specific structure has been described in detail above, and will not be repeated here.

According to the above embodiments:
The present application provides a liquid crystal display panel and a vehicle-mounted liquid crystal display device. The liquid crystal display panel comprises a display area and a functional area configured to transmit infrared light, wherein the liquid crystal display panel comprises: an array substrate comprising a plurality of insulating layers; a color filter substrate arranged opposite to the array substrate and comprising a plurality of insulating layers; wherein in the array substrate and/or the color filter substrate, a number of reflective interfaces formed by adjacent insulating layers of different refractive indices located in the functional area is greater than a number of adjacent reflective interfaces with different refractive indices located in the display area, and an absolute value of a difference in refractive indices of adjacent insulating layers on both sides of the reflective interface is greater than or equal to a first preset threshold. In this application, in the array substrate and/or color filter substrate, the number of reflective interfaces formed by adjacent insulating layers with different refractive indices in the functional area is greater than the number of adjacent reflective interfaces with different refractive indices in the display area. Because the reflectance of the liquid crystal display panel is superimposed by the reflectance of each film layer, the present application does not affect the infrared optical transmittance by making the number of reflective interfaces in the functional area larger than the number of reflective interfaces in the display area. In the display area, the reflectivity of the light in the functional area is improved. This reduces or even eliminates the brightness difference between the functional area and the display area when the display is completely black.

In the above-mentioned embodiments, the description of each embodiment has its own emphasis. For parts that are not described in detail in an embodiment, reference may be made to related descriptions of other embodiments.

The liquid crystal display panel and the vehicle-mounted liquid crystal display device provided by the embodiments of the present application have been described in detail above. Specific examples are used in this article to illustrate the principle and implementation of this application. The descriptions of the above embodiments are only used to help understand the technical solutions and core ideas of the present application. Those of ordinary skill in the art should understand that they can still modify the technical solutions described in the foregoing embodiments.

## Claims

1. A liquid crystal display panel (1) comprising a display area (131) and a functional area (132) configured to transmit infrared light, the liquid crystal display panel (1) comprises:
an array substrate (12) comprising a plurality of insulating layers;
a color filter substrate (11) arranged opposite to the array substrate (12) and comprising a plurality of insulating layers;
wherein in the array substrate (12) and/or the color filter substrate (11), a number of reflective interfaces formed by adjacent insulating layers of different refractive indices located in the functional area (132) is greater than a number of adjacent reflective interfaces with different refractive indices located in the display area (131), and an absolute value of a difference in refractive indices of adjacent insulating layers on both sides of the reflective interface is greater than or equal to a first preset threshold, to decrease the difference between the reflectivity of the functional area and the display area.

2. The liquid crystal display panel (1) according to Claim 1, **characterized in that** in the color filter substrate (11), the plurality of insulating layers comprise a first substrate (111) and a protective layer (114), in at least one of a side of the first substrate (111) close to the protective layer (114) and a side of the first substrate (111) away from the protective layer (114), a number of reflective interfaces formed by adjacent insulating layers of different refractive indices located in the functional area (132) is greater than a number of reflective interfaces formed by adjacent insulating layers of different refractive indices located in the display area (131).

3. The liquid crystal display panel (1) according to Claim 2, **characterized in that** the color filter substrate (11) further comprises a black matrix (115) arranged between the first substrate (111) and the protective layer (114), the black matrix (115) is provided with a corresponding first opening in the functional area (132), and the first opening covers at least the functional area (132);
in the color filter substrate (11), the plurality of insulating layers further comprises an infrared light-transmitting layer (112) disposed in the functional area (132) and located between the first substrate (111) and the protective layer (114), an absolute value of a difference in refractive indices between the infrared light-transmitting layer (112) and an adjacent insulating layer thereof is greater than or equal to the first preset threshold.

4. The liquid crystal display panel (1) according to Claim 3, **characterized in that** the liquid crystal display panel (1) comprises a plurality of display pixels arranged in the display area (131), and the black matrix (115) is provided with a second opening corresponding to the display pixel;
the plurality of insulating layers further comprise a color resist layer (113) disposed at the first opening and the second opening, and an absolute value of a difference in refractive indices between the color resist layer (113) and an adjacent insulating layer thereof is greater than or equal to the first preset threshold;
the infrared light-transmitting layer (112) is arranged between the color resist layer (113) and the first substrate (111), or the infrared light-transmitting layer (112) is arranged between the color resist layer (113) and the protective layer (114).

5. The liquid crystal display panel (1) according to Claim 4, **characterized in that** in the display area (131), the color resist layer (113) comprises a plurality of color resist blocks corresponding to colors of display pixels;
in the functional area (132), the color resist layer (113) comprises at least two stacked layers of color resist sub-layers (113d) with different colors passing through, an absolute value of a difference in refractive indices of the color resist sub-layers (113d) with different colors passing through is less than or equal to a second preset threshold, and the second preset threshold is less than the first preset threshold.

6. The liquid crystal display panel (1) according to Claim 3, **characterized in that** the infrared light-transmitting layer (112) comprises a first inorganic layer (112a) and a second inorganic layer (112b) that are stacked;
an absolute value of a difference in refractive indices between the first inorganic layer (112a) and an adjacent insulating layer thereof is greater than or equal to the first preset threshold;
an absolute value of a difference in refractive indices between the second inorganic layer (112b) and an adjacent insulating layer thereof is greater than or equal to the first preset threshold.

7. The liquid crystal display panel (1) according to Claim 2, **characterized in that** in the color filter substrate (11), the plurality of insulating layers further comprise a high resistance layer (311) disposed on a side of the first substrate (111) away from the protective layer (114);
the high resistance layer (311) comprises a first high resistance area (311a) located in the functional area (132) and a second high resistance area (311b) located in the display area (131), refractive indices of the high resistance layer (311) in the first high resistance area (311a) and the second high resistance area (31b) are different;
an absolute value of a difference between the refractive index of the high resistance layer (311) in the first high resistance area (311a) and the refractive index of the first substrate (111) is greater than or equal to the first preset threshold;
an absolute value of a difference between the refractive index of the high resistance layer (311) in the second high resistance area (311b) and the refractive index of the first substrate (111) is greater than or equal to a second preset threshold, and the second preset threshold is less than the first preset threshold.

8. The liquid crystal display panel (1) according to Claim 7, **characterized in that** the liquid crystal display panel (1) further comprises a first polarizer (14) arranged on a side of the array substrate (12) away from the color filter substrate (11) and a second polarizer (15) arranged on a side of the color filter substrate (11) away from the array substrate (12);
the high resistance layer (311) is disposed between the first substrate (111) and the second polarizer (14).

9. The liquid crystal display panel (1) according to Claim 1, **characterized in that** in the array substrate (12), the plurality of insulating layers comprise a second substrate (121) and a passivation layer (127), in at least one of a side of the second substrate (121) close to the passivation layer (127) and a side of the second substrate (121) away from the passivation layer (127), a number of reflective interfaces formed by adjacent insulating layers with different refractive indices located in the functional area (132) is greater than a number of reflective interfaces formed by adjacent insulating layers with different refractive indices located in the display area (131).

10. The liquid crystal display panel (1) according to Claim 9, **characterized in that** the array substrate (12) further comprises a metal conductive layer, the metal conductive layer is provided with a corresponding third opening in the functional area (132), and the third opening at least covers the functional area (132).

11. The liquid crystal display panel (1) according to Claim 10, **characterized in that** in the array substrate (12), the plurality of insulating layers further comprise a buffer layer (122), a gate insulating layer (123), and an interlayer insulating layer (124) that are sequentially stacked between the second substrate (121) and the passivation layer (127), the buffer layer (122) extends from the display area (131) to the functional area (132), the gate insulating layer (123) extends from the display area (131) to the functional area (132), and the interlayer insulating layer (124) extends from the display area (131) to the functional area (132);
the metal conductive layer comprises a first electrode layer (126) and a second electrode layer (128) disposed on both sides of the passivation layer (127), and the passivation layer (127) is in direct contact with a planarization layer (125) in the functional area (132).

12. A vehicle-mounted liquid crystal display device, comprising:
the liquid crystal display panel (1) according to any one of Claims 1 to 11;
an infrared camera (41) arranged on a side of the array substrate (12) away from the color filter substrate (11), and the infrared camera (41) arranged on the functional area (132).

## Patentansprüche

1. Ein Flüssigkristall-Anzeigepanel (1) mit einem Anzeigebereich (131) und einem Funktionsbereich (132), der so ausgelegt ist, dass er Infrarotstrahlung durchlässt, wobei das Flüssigkristall-Anzeigepanel (1) Folgendes umfasst:
ein Array-Substrat (12), das mehrere Isolierschichten umfasst;
ein Farbfiltersubstrat (11), das dem Array-Substrat (12) gegenüberliegend angeordnet ist und mehrere Isolierschichten umfasst;
wobei im Array-Substrat (12) und/oder im Farbfiltersubstrat (11) die Anzahl der reflektierenden Grenzflächen, die durch benachbarte Isolierschichten mit unterschiedlichen Brechungsindizes im Funktionsbereich (132) gebildet werden, größer als die Anzahl der benachbarten reflektierenden Grenzflächen mit unterschiedlichen Brechungsindizes im Anzeigebereich (131) ist, und der Absolutwert der Differenz der Brechungsindizes benachbarter Isolierschichten auf beiden Seiten der reflektierenden Grenzfläche größer oder gleich einem ersten voreingestellten Schwellenwert ist, um den Unterschied zwischen dem Reflexionsgrad des Funktionsbereichs und des Anzeigebereichs zu verringern.

2. Flüssigkristall-Anzeigepanel (1) nach Anspruch 1, **dadurch gekennzeichnet, dass** im Farbfiltersubstrat (11) die mehreren Isolierschichten ein erstes Substrat (111) und eine Schutzschicht (114) umfassen, wobei an mindestens einer Seite des ersten Substrats (111) nahe der Schutzschicht (114) und an einer Seite des ersten Substrats (111), die von der Schutzschicht (114) abgewandt ist, die Anzahl der reflektierenden Grenzflächen, die durch benachbarte Isolierschichten mit unterschiedlichen Brechungsindizes im Funktionsbereich (132) gebildet werden, größer als die Anzahl der reflektierenden Grenzflächen ist, die durch benachbarte Isolierschichten mit unterschiedlichen Brechungsindizes im Anzeigebereich (131) gebildet werden.

3. Flüssigkristall-Anzeigepanel (1) nach Anspruch 2, **dadurch gekennzeichnet, dass** das Farbfiltersubstrat (11) ferner eine zwischen dem ersten Substrat (111) und der Schutzschicht (114) angeordnete schwarze Matrix (115) umfasst, die schwarze Matrix (115) im Funktionsbereich (132) mit einer entsprechenden ersten Öffnung versehen ist und die erste Öffnung zumindest den Funktionsbereich (132) abdeckt;
im Farbfiltersubstrat (11), die mehreren Isolierschichten ferner eine infrarotlichtdurchlässige Schicht (112) umfassen, die im Funktionsbereich (132) angeordnet ist und sich zwischen dem ersten Substrat (111) und der Schutzschicht (114) befindet, wobei der Absolutwert einer Differenz der Brechungsindizes zwischen der infrarotlichtdurchlässigen Schicht (112) und einer benachbarten Isolierschicht davon größer oder gleich dem ersten voreingestellten Schwellenwert ist.

4. Flüssigkristall-Anzeigepanel (1) nach Anspruch 3, **dadurch gekennzeichnet, dass** das Flüssigkristall-Anzeigepanel (1) eine Vielzahl von im Anzeigebereich (131) angeordneten Anzeigepixeln umfasst und die schwarze Matrix (115) mit einer dem Anzeigepixel entsprechenden zweiten Öffnung versehen ist;
die mehreren Isolierschichten ferner eine Farbresistschicht (113) umfassen, die an der ersten Öffnung und der zweiten Öffnung angeordnet ist, und ein Absolutwert der Differenz der Brechungsindizes zwischen der Farbresistschicht (113) und einer benachbarten Isolierschicht davon größer oder gleich dem ersten voreingestellten Schwellenwert ist;
die infrarotlichtdurchlässige Schicht (112) zwischen der Farbresistschicht (113) und dem ersten Substrat (111) angeordnet ist, oder die infrarotlichtdurchlässige Schicht (112) zwischen der Farbresistschicht (113) und der Schutzschicht (114) angeordnet ist.

5. Flüssigkristall-Anzeigepanel (1) nach Anspruch 4, **dadurch gekennzeichnet, dass** die Farbresistschicht (113) im Anzeigebereich (131) eine Vielzahl von Farbresistblöcken umfasst, die den Farben der Anzeigepixel entsprechen;
im Funktionsbereich (132), die Farbresistschicht (113) mindestens zwei übereinanderliegende Schichten aus Farbresis-Unterschichten (113d) umfasst, durch die unterschiedliche Farben hindurchtreten, wobei der Absolutwert der Differenz der Brechungsindizes der Farbresis-Unterschichten (113d), durch die unterschiedliche Farben hindurchtreten, kleiner oder gleich einem zweiten voreingestellten Schwellenwert ist, und der zweite voreingestellte Schwellenwert kleiner als der erste voreingestellte Schwellenwert ist.

6. Flüssigkristall-Anzeigepanel (1) nach Anspruch 3, **dadurch gekennzeichnet, dass** die infrarotlichtdurchlässige Schicht (112) eine erste anorganische Schicht (112a) und eine zweite anorganische Schicht (112b) umfasst, die übereinander angeordnet sind;
der Absolutwert der Differenz der Brechungsindizes zwischen der ersten anorganischen Schicht (112a) und einer angrenzenden isolierenden Schicht davon größer oder gleich dem ersten voreingestellten Schwellenwert ist;
der Absolutwert der Differenz der Brechungsindizes zwischen der zweiten anorganischen Schicht (112b) und einer angrenzenden Isolierschicht größer oder gleich dem ersten voreingestellten Schwellenwert ist.

7. Flüssigkristall-Anzeigepanel (1) nach Anspruch 2, **dadurch gekennzeichnet, dass** die mehreren Isolierschichten im Farbfiltersubstrat (11) ferner eine hochohmige Schicht (311) umfassen, die auf einer von der Schutzschicht (114) abgewandten Seite des ersten Substrats (111) angeordnet ist;
die hochohmige Schicht (311) einen ersten Hochwiderstandsbereich (311a), der sich im Funktionsbereich (132) befindet, und einen zweiten Hochwiderstandsbereich (311b), der sich im Anzeigebereich (131) befindet, umfasst, die Brechungsindizes der hochohmigen Schicht (311) im ersten Hochwiderstandsbereich (311a) und im zweiten Hochwiderstandsbereich (311b) unterschiedlich sind;
der Absolutwert der Differenz zwischen dem Brechungsindex der hochohmigen Schicht (311) im ersten Hochwiderstandsbereich (311a) und dem Brechungsindex des ersten Substrats (111) größer oder gleich dem ersten voreingestellten Schwellenwert ist;
der Absolutwert der Differenz zwischen dem Brechungsindex der hochohmigen Schicht (311) im zweiten Hochwiderstandsbereich (311b) und dem Brechungsindex des ersten Substrats (111) größer oder gleich einem zweiten voreingestellten Schwellenwert ist, und der zweite voreingestellte Schwellenwert kleiner als der erste voreingestellte Schwellenwert ist.

8. Flüssigkristall-Anzeigepanel (1) nach Anspruch 7, **dadurch gekennzeichnet, dass** das Flüssigkristall-Anzeigepanel (1) ferner einen ersten Polarisator (14), der auf einer vom Farbfiltersubstrat (11) abgewandten Seite des Array-Substrats (12) angeordnet ist, und einen zweiten Polarisator (15) umfasst, der auf einer vom Array-Substrat (12) abgewandten Seite des Farbfiltersubstrats (11) angeordnet ist;
die hochohmige Schicht (311) zwischen dem ersten Substrat (111) und dem zweiten Polarisator (14) angeordnet ist.

9. Flüssigkristall-Anzeigepanel (1) nach Anspruch 1, **dadurch gekennzeichnet, dass** im Array-Substrat (12) die mehreren Isolierschichten ein zweites Substrat (121) und eine Passivierungsschicht (127) umfassen, wobei an mindestens einer Seite des zweiten Substrats (121) nahe der Passivierungsschicht (127) und an einer Seite des zweiten Substrats (121), die von der Passivierungsschicht (127) entfernt ist, ist die Anzahl der reflektierenden Grenzflächen, die durch benachbarte Isolierschichten mit unterschiedlichen Brechungsindizes gebildet werden und sich im Funktionsbereich (132) befinden, größer als die Anzahl der reflektierenden Grenzflächen, die durch benachbarte Isolierschichten mit unterschiedlichen Brechungsindizes gebildet werden und sich im Anzeigebereich (131) befinden.

10. Flüssigkristall-Anzeigepanel (1) nach Anspruch 9, **dadurch gekennzeichnet, dass** das Array-Substrat (12) ferner eine metallische Leiterschicht umfasst, wobei die metallische Leiterschicht im Funktionsbereich (132) mit einer entsprechenden dritten Öffnung versehen ist und die dritte Öffnung zumindest den Funktionsbereich (132) abdeckt.

11. Flüssigkristall-Anzeigepanel (1) nach Anspruch 10, **dadurch gekennzeichnet, dass** im Array-Substrat (12) die mehreren Isolierschichten ferner eine Pufferschicht (122), eine Gate-Isolierschicht (123) und eine Zwischenschicht-Isolierschicht (124) umfassen, die nacheinander zwischen dem zweiten Substrat (121) und der Passivierungsschicht (127) angeordnet sind, wobei sich die Pufferschicht (122) vom Anzeigebereich (131) bis zum Funktionsbereich (132) erstreckt, sich die Gate-Isolierschicht (123) vom Anzeigebereich (131) bis zum Funktionsbereich (132) erstreckt und sich die Zwischenschicht-Isolierschicht (124) vom Anzeigebereich (131) bis zum Funktionsbereich (132) erstreckt;
die metallische Leiterschicht eine erste Elektrodenschicht (126) und eine zweite Elektrodenschicht (128) umfasst, die auf beiden Seiten der Passivierungsschicht (127) angeordnet sind, und die Passivierungsschicht (127) im Funktionsbereich (132) in direktem Kontakt mit einer Planarisierungsschicht (125) steht.

12. Ein in einem Fahrzeug eingebautes Flüssigkristall-Anzeigepanel, umfassend:
das Flüssigkristall-Anzeigepanel (1) nach einem der Ansprüche 1 bis 11; und
eine Infrarotkamera (41), die auf einer dem Farbfiltersubstrat (11) abgewandten Seite des Array-Substrats (12) angeordnet ist, wobei die Infrarotkamera (41) auf dem Funktionsbereich (132) angeordnet ist.

## Revendications

1. Panneau d'affichage à cristaux liquides (1) comprenant une zone d'affichage (131) et une zone fonctionnelle (132) conçue pour transmettre la lumière infrarouge, le panneau d'affichage à cristaux liquides (1) comprenant :
un substrat de matrice (12) comprenant une pluralité de couches isolantes ;
un substrat de filtre de couleur (11) disposé en face du substrat de matrice (12) et comprenant plusieurs couches isolantes ;
dans lequel, dans le substrat de matrice (12) et/ou le substrat de filtre de couleur (11), le nombre d'interfaces réfléchissantes formées par des couches isolantes adjacentes présentant des indices de réfraction différents et situées dans la zone fonctionnelle (132) est supérieur au nombre d'interfaces réfléchissantes adjacentes présentant des indices de réfraction différents et situées dans la zone d'affichage (131), et la valeur absolue de la différence d'indices de réfraction entre les couches isolantes adjacentes de part et d'autre de l'interface réfléchissante est supérieure ou égale à un premier seuil prédéfini, afin de réduire la différence entre la réflectivité de la zone fonctionnelle et celle de la zone d'affichage.

2. Panneau d'affichage à cristaux liquides (1) selon la revendication 1, **caractérisé en ce que**, dans le substrat de filtre de couleur (11), la pluralité de couches isolantes comprend un premier substrat (111) et une couche protectrice (114), sur au moins l'un des côtés du premier substrat (111) proche de la couche protectrice (114) et l'un des côtés du premier substrat (111) éloigné de la couche protectrice (114), le nombre d'interfaces réfléchissantes formées par des couches isolantes adjacentes présentant des indices de réfraction différents et situées dans la zone fonctionnelle (132) est supérieur au nombre d'interfaces réfléchissantes formées par des couches isolantes adjacentes présentant des indices de réfraction différents et situées dans la zone d'affichage (131).

3. Panneau d'affichage à cristaux liquides (1) selon la revendication 2, **caractérisé en ce que** le substrat de filtre de couleur (11) comprend en outre une matrice noire (115) disposée entre le premier substrat (111) et la couche protectrice (114), la matrice noire (115) est pourvue d'une première ouverture correspondante dans la zone fonctionnelle (132), et la première ouverture recouvre au moins la zone fonctionnelle (132) ;
dans le substrat de filtre de couleur (11), la pluralité de couches isolantes comprend en outre une couche transmettant la lumière infrarouge (112) disposée dans la zone fonctionnelle (132) et située entre le premier substrat (111) et la couche protectrice (114), la valeur absolue de la différence d'indices de réfraction entre la couche transmettant la lumière infrarouge (112) et une couche isolante adjacente à celle-ci étant supérieure ou égale au premier seuil prédéfini.

4. Panneau d'affichage à cristaux liquides (1) selon la revendication 3, **caractérisé en ce que** le panneau d'affichage à cristaux liquides (1) comprend une pluralité de pixels d'affichage disposés dans la zone d'affichage (131), et **en ce que** la matrice noire (115) est pourvue d'une deuxième ouverture correspondant au pixel d'affichage ;
les différentes couches isolantes comprennent en outre une couche de résine photosensible colorée (113) disposée au niveau de la première ouverture et de la deuxième ouverture, et la valeur absolue de la différence d'indices de réfraction entre la couche de résine photosensible colorée (113) et une couche isolante adjacente à celle-ci est supérieure ou égale au premier seuil prédéfini ;
la couche transmettant la lumière infrarouge (112) est disposée entre la couche de résine photosensible colorée (113) et le premier substrat (111), ou bien la couche transmettant la lumière infrarouge (112) est disposée entre la couche de résine photosensible colorée (113) et la couche protectrice (114).

5. Panneau d'affichage à cristaux liquides (1) selon la revendication 4, **caractérisé en ce que**, dans la zone d'affichage (131), la couche de résine photosensible colorée (113) comprend une pluralité de blocs de résine photosensible colorée correspondant aux couleurs des pixels d'affichage ;
dans la zone fonctionnelle (132), la couche de résine photosensible colorée (113) comprend au moins deux couches superposées de sous-couches de résine photosensible colorée (113d) laissant passer des couleurs différentes, la valeur absolue de la différence entre les indices de réfraction des sous-couches de résine photosensible colorée (113d) laissant passer des couleurs différentes est inférieure ou égale à un deuxième seuil prédéfini, et le deuxième seuil prédéfini est inférieur au premier seuil prédéfini.

6. Panneau d'affichage à cristaux liquides (1) selon la revendication 3, **caractérisé en ce que** la couche transmettant la lumière infrarouge (112) comprend une première couche inorganique (112a) et une deuxième couche inorganique (112b) qui sont superposées ;
la valeur absolue de la différence d'indices de réfraction entre la première couche inorganique (112a) et une couche isolante adjacente à celle-ci est supérieure ou égale au premier seuil prédéfini ;
la valeur absolue de la différence d'indices de réfraction entre la deuxième couche inorganique (112b) et une couche isolante adjacente à celle-ci est supérieure ou égale au premier seuil prédéfini.

7. Panneau d'affichage à cristaux liquides (1) selon la revendication 2, **caractérisé en ce que**, dans le substrat de filtre de couleur (11), la pluralité de couches isolantes comprend en outre une couche à haute résistance (311) disposée sur une face du premier substrat (111) opposée à la couche protectrice (114) ;
la couche à haute résistance (311) comprend une première zone à haute résistance (311a) située dans la zone fonctionnelle (132) et une deuxième zone à haute résistance (311b) située dans la zone d'affichage (131), les indices de réfraction de la couche à haute résistance (311) dans la première zone à haute résistance (311a) et dans la deuxième zone à haute résistance (311b) sont différents ;
la valeur absolue de la différence entre l'indice de réfraction de la couche à haute résistance (311) dans la première zone à haute résistance (311a) et l'indice de réfraction du premier substrat (111) est supérieure ou égale au premier seuil prédéfini ;
la valeur absolue de la différence entre l'indice de réfraction de la couche à haute résistance (311) dans la deuxième zone à haute résistance (311b) et l'indice de réfraction du premier substrat (111) est supérieure ou égale à un deuxième seuil prédéfini, et ce deuxième seuil prédéfini est inférieur au premier seuil prédéfini.

8. Panneau d'affichage à cristaux liquides (1) selon la revendication 7, **caractérisé en ce que** le panneau d'affichage à cristaux liquides (1) comprend en outre un premier polariseur (14) disposé sur un côté du substrat de matrice (12) opposé au substrat de filtre de couleur (11) et un deuxième polariseur (15) disposé sur un côté du substrat de filtre de couleur (11) opposé au substrat de matrice (12) ;
la couche à haute résistance (311) est disposée entre le premier substrat (111) et le deuxième polariseur (14).

9. Panneau d'affichage à cristaux liquides (1) selon la revendication 1, **caractérisé en ce que**, dans le substrat de matrice (12), la pluralité de couches isolantes comprend un deuxième substrat (121) et une couche de passivation (127), sur au moins l'un des côtés du deuxième substrat (121) proches de la couche de passivation (127) et l'un des côtés du deuxième substrat (121) éloigné de la couche de passivation (127), le nombre d'interfaces réfléchissantes formées par des couches isolantes adjacentes présentant des indices de réfraction différents et situées dans la zone fonctionnelle (132) est supérieur au nombre d'interfaces réfléchissantes formées par des couches isolantes adjacentes présentant des indices de réfraction différents et situées dans la zone d'affichage (131).

10. Panneau d'affichage à cristaux liquides (1) selon la revendication 9, **caractérisé en ce que** le substrat de matrice (12) comprend en outre une couche conductrice métallique, ladite couche conductrice métallique étant pourvue d'une troisième ouverture correspondante dans la zone fonctionnelle (132), et ladite troisième ouverture recouvrant au moins la zone fonctionnelle (132).

11. Panneau d'affichage à cristaux liquides (1) selon la revendication 10, **caractérisé en ce que**, dans le substrat de matrice (12), la pluralité de couches isolantes comprend en outre une couche tampon (122), une couche isolante de grille (123) et une couche isolante intercouche (124) qui sont empilées séquentiellement entre le deuxième substrat (121) et la couche de passivation (127), la couche tampon (122) s'étend de la zone d'affichage (131) à la zone fonctionnelle (132), la couche isolante de grille (123) s'étend de la zone d'affichage (131) à la zone fonctionnelle (132), et la couche isolante intercouche (124) s'étend de la zone d'affichage (131) à la zone fonctionnelle (132) ;
la couche conductrice métallique comprend une première couche d'électrode (126) et une deuxième couche d'électrode (128) disposées de part et d'autre de la couche de passivation (127), et la couche de passivation (127) est en contact direct avec une couche de planarisation (125) dans la zone fonctionnelle (132).

12. Dispositif d'affichage à cristaux liquides monté sur un véhicule, comprenant :
le panneau d'affichage à cristaux liquides (1) selon l'une quelconque des revendications 1 à 11 ;
une caméra infrarouge (41) disposée sur un côté du substrat de matrice (12) opposé au substrat de filtre de couleur (11), et ladite caméra infrarouge (41) étant disposée sur la zone fonctionnelle (132).
